**Europäisches Patentamt**

**European Patent Office**

**Office européen des brevets**

(11) Numéro de publication: **0018279**
**A1**

## DEMANDE DE BREVET EUROPEEN

(21) Numéro de dépôt: **80400498.4**

(22) Date de dépôt: **15.04.80**

(51) Int. Cl.³: **G 01 S 17/87**, F 41 G 3/06, G 02 B 23/14

(30) Priorité: **20.04.79 FR 7910067**

(43) Date de publication de la demande: **29.10.80** **Bulletin 80/22**

(84) Etats contractants désignés: **DE GB NL SE**

(71) Demandeur: **"THOMSON-CSF" - SCPI, 173, Boulevard Haussmann, F-75360 Paris Cedex 08 (FR)**

(72) Inventeur: **Ternant, François, "THOMSON-CSF" - SCPI 173, bld Haussmann, F-75360 Paris Cedex 08 (FR)**

(74) Mandataire: **Trocellier, Roger et al, "THOMSON-CSF" - SCPI 173, bld Haussmann, F-75360 Paris Cedex 08 (FR)**

(54) **Système de détection optoélectrique et d'observation.**

(57) Système permettant de combiner l'observation visuelle panoramique avec la détection laser à des fins de contre-mesure ou de réponse IFF.

Il comporte un groupement d'épiscopes, chaque épiscope (11, 12) étant doté d'un séparateur dichroïque (1) formé de préférence sur la première surface réfléchissante de l'épiscope pour sélectionner le rayonnement laser et le transmettre vers un récepteur optique (5-6-7) qui peut être suivi d'un ré-émetteur du type à rétroréflecteur modulable (22-23) pour constituer un répondeur IFF. En outre, un filtrage optique (17) préserve l'observateur des rayonnements laser dangereux, notamment à 1,06 μm.

L'invention s'applique notamment à l'équipement laser à bord de véhicules blindés.

1

# SYSTEME DE DETECTION OPTOELECTRIQUE ET D'OBSERVATION

La présente invention concerne un système de détection optoélectrique et d'observation conçu plus particulièrement pour résoudre le problème de la détection laser à bord des chars.

En raison des grands avantages qu'ils procurent, les équipements laser sont destinés à se développer rapidement au sein des armées modernes. Tout équipement laser requiert l'existence de moyens optiques ouverts sur l'extérieur. Cette contrainte, inhérente à la nature même du rayonnement laser pose de sérieux problèmes lorsqu'il s'agit d'équiper des véhicules blindés comme les chars de combat ou de reconnaissance.

De par sa nature et sa mission, un char est un véhicule tout terrain amené à franchir divers obstacles et les moyens optiques qui l'équipent sont conçus en fonction de ces impératifs et notamment pour résister aux vibrations et aux chocs violents et être protégés le plus possible contre des projections de boues et des poussières.

L'observation du terrain, de l'intérieur d'un char, s'effectue au moyen d'épiscopes. Un épiscope est constitué d'un ou deux prismes formant un montage déviateur optique équivalent à celui procuré par deux miroirs plans réfléchissants. Un premier miroir dévie le rayonnement provenant du champ observé vers le bas, la direction de visée étant considérée horizontale le faisceau lumineux incident est dévié verticalement ; le second miroir réfléchit ensuite le rayonnement vers l'observateur. Les inclinaisons des miroirs sont telles que le rayonnement sortant présente une direction parallèle à celle de visée correspondant à l'axe optique à l'entrée de l'épiscope.

2

Pour assurer la vision panoramique du monde extérieur, une pluralité d'épiscopes sont utilisés, regroupés généralement sur un tourelleau c'est-à-dire à la partie la plus élevée du véhicule. Ces moyens optiques d'observation visuelle vers l'extérieur constituent ainsi des moyens vitaux pour l'équipage et ils sont en conséquence conçus très résistants et bien protégés. En outre, ils offrent une surface optique importante tournée vers l'extérieur et consécutivement un champ large pour l'observation.

Un objet de la présente invention est de réaliser un système de détection optoélectrique et d'observation combinant des moyens laser avec des moyens optiques d'observation par épiscope et autorisant une mise en place aisée d'un équipement laser à l'intérieur d'un char, par utilisation des moyens optiques existants tournés vers l'extérieur à la fois pour l'observation visuelle et pour la voie laser. Ainsi il n'est pas nécessaire de créer de nouvelles ouvertures dans le véhicule, ou à défaut de telles ouvertures, de placer l'équipement laser à l'extérieur.

Par système de détection optoélectrique pour la voie laser on entend, par analogie avec la dénomination système de détection électromagnétique pour un système radar, aussi bien un récepteur optique qu'un ensemble émetteur-récepteur, dans ce dernier cas il est plus particulièrement envisagé un dispositif répondeur ami-ennemi comme on le verra par la suite. Les applications à la contre-mesure et à l'identification ami-ennemi requièrent une surveillance omnidirectionnelle permanente en gisement, et l'implantation de systèmes détecteurs laser au sein d'épiscopes de véhicule blindé paraît donc une mesure bien adaptée.

Selon une caractéristique de l'invention, le système de détection optoélectrique et d'observation

3

comporte des moyens d'observation visuelle panoramique sous forme d'un groupement d'épiscopes, et dans lequel chaque épiscope est combiné avec des moyens laser comportant un récepteur optique en utilisant un séparateur dichroïque interposé sur le trajet optique de l'épiscope considéré, le séparateur dichroïque étant déterminé pour sélectionner dans le rayonnement reçu celui destiné au récepteur optique.

Les particularités et avantages de la présente invention apparaîtront dans la description qui suit, donnée à titre d'exemple à l'aide des figures annexées qui représentent :

- la figure 1, un schéma simplifié d'un système de détection et d'observation conforme à l'invention ;
- la figure 2, un schéma de détail rappelant le principe de la couverture panoramique par des épiscopes ;
- la figure 3, un schéma d'une variante préférée de réalisation du système selon la figure 1 ; et
- les figures 4 à 6, d'autres variantes de réalisation.

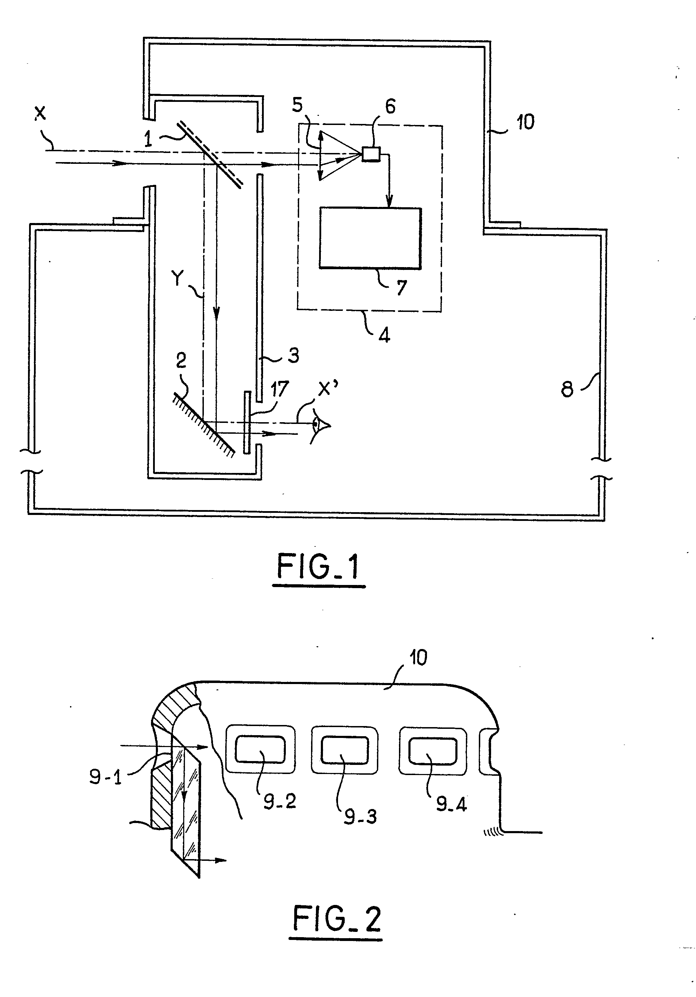

Sur le schéma simplifié de la figure 1, il a été représenté par souci de simplification un seul épiscope et des moyens laser associés étant entendu qu'une configuration semblable est reproduite pour chaque épiscope inclus dans le système afin d'exercer la surveillance panoramique. L'épiscope peut consister en un prisme de section rectangulaire terminé par deux faces planes traitées réfléchissantes, parallèles et inclinées de 45° sur l'axe Y du prisme ; il est représenté par ses deux faces terminales 1 et 2 situées dans un boîtier support 3. Celui-ci comporte des ouvertures à l'entrée et à la sortie pour la réception du rayonnement incident selon la direction de visée X orthogonale à Y

4

et pour la transmission vers l'observateur de ce rayon
nement après réflexions sur les faces 1 et 2 selon la
direction X' décalée vers le bas et parallèle à X. Les
moyens laser 4 comportent un récepteur optique symbolisé par une optique de focalisation 5, un détecteur
optoélectrique et des circuits de traitement 7 des
signaux détectés. Les circuits 7 sont conçus en fonction de l'application envisagée. L'observateur situé
dans le véhicule blindé 8 peut ainsi observé l'environ
nement extérieur ; la vision panoramique est obtenue
par agencement d'une pluralité d'épiscope 9-1, ...
9-j,... sur un tourelleau 10 constituant la partie
la plus élevée du véhicule, comme représenté sur le
schéma de la figure 2.

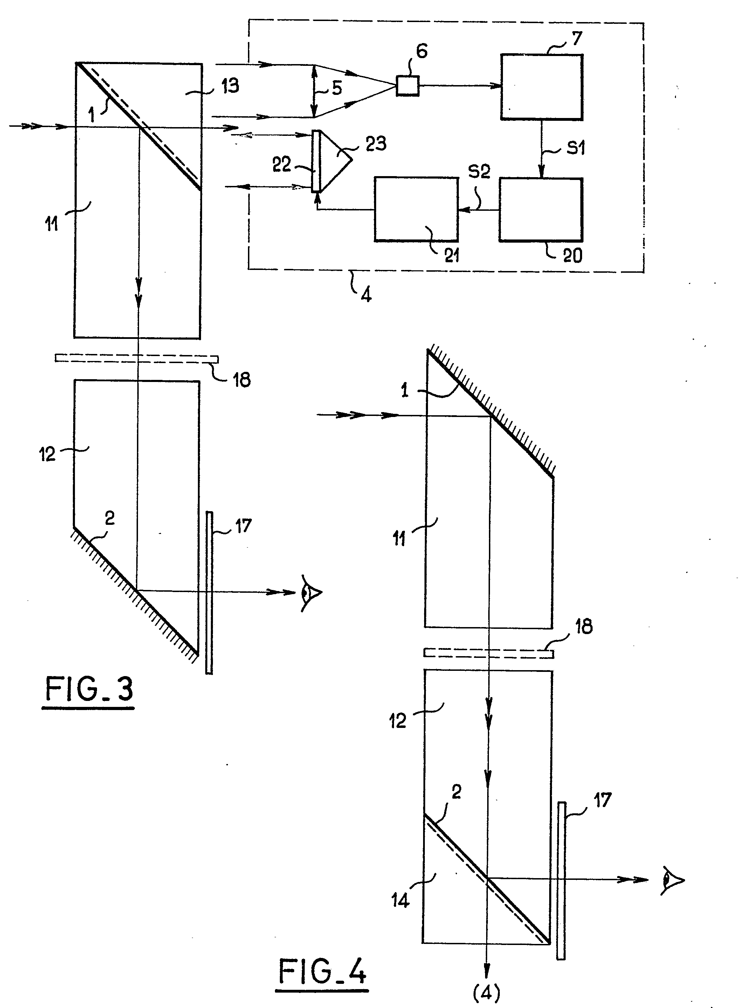

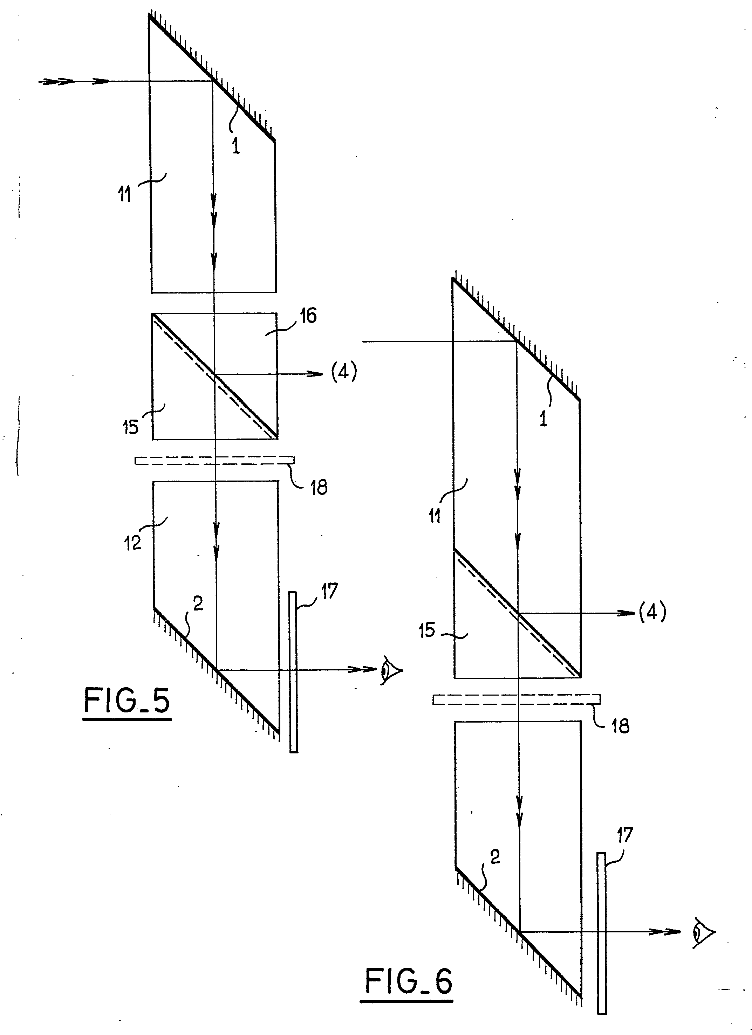

Conformément à l'invention, un élément séparateur dichroïque est interposé sur le trajet optique
de l'épiscope pour sélectionner dans le rayonnement
incident le rayonnement laser destiné au récepteur 4.
De manière préférée, la première face réfléchissante
1 est traitée dichroïque en sorte de faciliter l'implantation des moyens laser dans la partie supérieure
du véhicule blindé. Plusieurs versions de réalisation
sont représentées sur les figures 3, 4, 5 et 6 respectivement où le dispositif épiscope est constitué
par deux prismes 11 et 12 de section rectangulaire.
Suivant la figure 3, un troisième prisme 13 est disposé à la partie supérieure et l'une des faces en
contact des éléments 11 et 13 est traitée dichroïque.
La même disposition est produite sur la version de la
figure 4, cette fois à la partie inférieure avec un
élément prismatique 14, les moyens laser 4 se trouvant
à l'intérieur du char et non dans le tourelleau. Selon
les figures 5 et 6, le séparateur dichroïque est interposé entre les faces terminales 1 et 2 réfléchissantes, formé au moyen de deux prismes accolés 15

5

et 16 ou d'un prisme 15 accolé à un prisme 11 taillé à faces parallèles.

Le récepteur optique 5-6-7 de la figure 1 constitue le premier maillon d'une chaîne de détection laser. Le système ainsi conçu peut être appliqué à la contre-mesure pour assurer la détection de toute illumination laser correspondant à une longueur d'onde donnée. Ce premier maillon peut également faire partie d'un répondeur dans le cadre d'une application à la réalisation d'un système d'identification ami-ennemi par laser encore appelé IFF-laser selon la terminologie anglo-saxonne "Identification Friend or Foe", les fonctions à assurer étant la détection et l'identification d'interrogation amies transmises par faisceau laser codé puis l'élaboration d'une réponse optique également codée.

La réponse à une interrogation IFF amie peut s'effectuer avantageusement par rétroréflexion modulée du faisceau interrogateur, cette solution étant envisagée dans ce qui suit et évitant d'avoir à disposer d'une source laser. Le répondeur comporte dans ce concept en aval du détecteur 6 un circuit de décodage 7 qui identifie le code d'interrogation formé par modulation de faisceau interrogateur provenant d'une source laser extérieure modulée en conséquence. Le signal S1 d'identification est transmis à la partie réémettrice par rétroréflexion dont la structure est représentée sur le diagramme de la figure 3. La partie réémettrice comporte un circuit de codage 20 élaborant le code de réponse S2 appliqué à un circuit de commande 21 d'un dispositif obturateur optique à commande électrique 22 interposé sur le trajet optique parvenant à un dispositif rétroréflecteur 23. Ce dernier est symbolisé par un coin de cube et l'obturateur optoélec-

6

trique 22 peut être réalisé au moyen d'une céramique PLZT et de polariseurs. A titre d'exemple, on pourra se reporter notamment à la demande de brevet français n° 77 01990 du 25 Janvier 1977 publiée sous le n° 2 378 404 et dans laquelle est décrit un répondeur laser procédant par rétroréflexion.

Les dispositifs rétroréflecteurs modulables sont commandés en sorte de réfléchir ou d'absorber l'impulsion laser incidente d'interrogation. La réponse IFF est par suite constituée d'un mot de plusieurs bits dans lequel une impulsion absorbée correspond à un bit "O" et une impulsion réfléchie correspond à un bit "1". Dans le cas d'un obturateur PLZT, l'application d'une tension de commande le rend transparent, l'obturateur étant opaque au repos ; il en résulte la réflexion ou l'absorption de l'onde incidente d'interrogation. Le dispositif interrogateur annexe, non représenté, reconnaît pour ami le véhicule illuminé qui lui réfléchit la réponse correcte, l'identification s'effectuant par détection et traitement des signaux renvoyés. L'émission à haute directivité produite par le laser illuminateur situé à distance est compatible dans cette installation où les dispositifs répondeurs associés aux épiscopes et assurant une couverture omnidirectionnelle en gisement se trouvent avantageusement regroupés dans une zone limitée, précise et aisément reconnaissable, constituée par le tourelleau situé au sommet du véhicule. Le servant du laser interrogateur sait qu'il doit illuminer cette partie du véhicule pour que la réponse IFF lui parvienne.

La mise en place de détecteurs d'illumination laser ou de répondeurs à rétroréflecteurs modulables au sein d'épiscopes d'observation panoramique se

7

révèle ainsi une solution avantageuse. Les moyens laser et les épiscopes sont regroupés dans un même endroit spécifique du véhicule qui est aisément décelable et pointable par le servant de l'illuminateur.

Une autre particularité de la présente invention réside dans la protection de la vue de l'observateur. Certains rayonnements laser, notamment ceux à 1,06μm dans le proche infrarouge produit par un laser YAG, sont dangereux, risquant d'altérer gravement la vue. Il est donc nécessaire d'incorporer à l'équipement des moyens de protection correspondants. Ces moyens consistent en un filtre optique absorbant pour les rayonnements laser dangereux. Le filtre peut être positionné en sortie (élément 17) ou dans l'espace entre les deux prismes de l'épiscope (élément 18) comme représenté sur les figures. La protection par filtre se révèle également utile, voire indispensable, dans le concept d'illuminations ennemies dans les bandes dangereuses.

Les rayonnements laser à prévoir sont plus particulièrement ceux situés dans l'infrarouge, compte tenu de la discrétion assurée par ces illuminateurs IR dans le cadre d'utilisations tactiques, et notamment la radiation visuelle à 1,06 μm émise par des impulsions.

Dans le concept plus particulièrement envisagé pour l'invention d'un détecteur de contre-mesure à 1,06 μm et/ou d'un répondeur sur la même longueur d'onde, le séparateur dichroïque élimine la plus grande partie des radiations dangereuses et le filtre optique 17 (ou 18) n'a plus à absorber que des résidus, ce qui permet de diminuer l'atténuation apportée dans la pratique par le filtre dans une partie du spectre visible. Le filtre peut être constitué par une lame de verre en métériau KG1 ou KG3 qui absorbe notablement les rayonnements infrarouge à partir de la longueur d'onde 1 μm.

0018279

8

REVENDICATIONS

1 - Système de détection optoélectrique et d'observation comportant des moyens d'observation visuelle panoramique sous forme d'un groupement d'épiscopes, caractérisé en ce que chaque épiscope (9-j) est combiné avec des moyens laser (4) comportant un récepteur optique (5-6-7), au moyen d'un séparateur dichroïque interposé sur le trajet optique de l'épiscope considéré, le séparateur dichroïque étant déterminé pour sélectionner dans le rayonnement reçu celui destiné au récepteur optique.

2 - Système selon la revendication 1, caractérisé en ce que chaque épiscope est combiné avec des moyens laser comportant, outre un récepteur optique, un réémetteur du type à rétroréflecteur modulable (20, 21, 22, 23) pour former un répondeur IFF.

3 - Système selon la revendication 1 ou 2, caractérisé en ce que le séparateur dichroïque est formé sur la surface plane réflectrice (1) d'entrée de l'épiscope sur laquelle se réfléchit le rayonnement incident provenant du champ observé.

4 - Système selon la revendication 1 ou 2, caractérisé en ce que le séparateur dichroïque est formé sur la surface plane réflectrice (2) de sortie de l'épiscope sur laquelle se réfléchit le rayonnement reçu pour être renvoyé en direction de l'observateur.

5 - Système selon la revendication 1 ou 2, caractérisé en ce que le séparateur dichroïque est interposé entre les deux surfaces planes réfléchissantes et parallèles de l'épiscope et formé sur une surface

9

plane de même orientation.

6 - Système selon l'une quelconque des revendications 3 à 5, caractérisé en ce que le séparateur est formé au moyen de prismes accolés avec un traitement dichroïque sur l'une des faces en contact (11-13 Fig.3, 12-14 Fig.4, 15-16 Fig.5, 15-11 Fig.6).

7 - Système selon l'une quelconque des revendications 1 à 6, caractérisé en ce qu'il comporte en outre des moyens de protection de la vue de l'observateur contre les radiations laser, notamment à 1,06 µm, sous forme d'un filtre optique absorbant (17, 18) interposé sur le trajet optique parvenant à l'observateur et en aval du séparateur dichroïque.

8 - Système selon l'ensemble des revendications 1, 2, 3, 6 et 7, appliqué à l'observation visuelle panoramique conjointement avec une détection laser dans l'infrarouge d'un illuminateur IFF annexe.

9 - Système de détection optoélectrique et d'observation comportant des moyens d'observation visuelle panoramique sous forme d'un groupement d'épiscopes, caractérisé en ce que chaque épiscope (9-j) est combiné avec un répondeur IFF laser destiné à traiter un illuminateur laser à 1,06 µm modulé par impulsion et comportant pour ce faire, des moyens de réémission utilisant un rétroréflecteur modulable et procédant par suppression d'impulsions, ladite combinaison étant obtenue au moyen d'un séparateur dichroïque interposé sur le trajet optique et formé, de préférence, sur la surface réfléchissante (1) d'entrée de l'épiscope qui réfléchit le rayonnement incident provenant du champ observé, et d'un filtre optique (17) absorbant pour la radiation 1,06 µm et positionné sur le trajet optique parvenant à l'observateur en aval du séparateur dichroïque.

0018279

1/3

FIG_1

FIG_2

0018279

FIG_3

FIG_4

FIG_5

FIG_6

Office européen
des brevets

**RAPPORT DE RECHERCHE EUROPEENNE**

0018279
Numéro de la demande

EP 80 40 0498

| Catégorie | Citation du document avec indication, en cas de besoin, des parties pertinentes | Revendica-tion concernée |
|---|---|---|
| X | FR - A - 2 140 699 (ETAT FRANCAIS)<br>* De page 3, ligne 1 à page 4, ligne 19; figure unique *<br><br>-- | 1,3 |
| X | GB - A - 1 505 314 (BARR & STROUD)<br>* Page 2, lignes 6-43, 77-96; de page 2, ligne 122 à page 3, ligne 6; page 3, lignes 28-57; figures 2,3,7,9 *<br><br>-- | 1,3,6,7 |
| X | FR - A - 1 503 124 (ASEA)<br>* De page 1, colonne de gauche, ligne 39 à page 2, colonne de droite, ligne 6; figure unique *<br><br>-- | 1,3,6,7 |
| X | CH - A - 503 259 (ELTRO)<br>* De colonne 3, ligne 46 à colon-ne 4, ligne 2; figure 3 *<br><br>-- | 1,4 |
|  | DE - A - 2 215 463 (PRECITRONIC)<br>* Le document en entier *<br><br>-- | 1,2,8,9 |
|  | FR - A - 2 290 673 (PRECITRONIC)<br>* De page 4, ligne 1 à page 6, ligne 27; figures 1,2 *<br><br>-- | 2 |
| A | DE - A - 2 453 265 (ELTRO)<br>* De page 2, ligne 31 à page 3, dernière ligne; figure unique * | 1,2,8,9 |

**DOCUMENTS CONSIDERES COMME PERTINENTS**

**CLASSEMENT DE LA DEMANDE (Int. Cl. 3)**

G 01 S 17/87
F 41 G 3/06
G 02 B 23/14

**DOMAINES TECHNIQUES RECHERCHES (Int. Cl. 3)**

G 01 S 17/74
17/87
G 02 B 23/14
F 41 G 3/06

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

---

Le présent rapport de recherche a été établi pour toutes les revendications

| Lieu de la recherche | Date d'achevement de la recherche | Examinateur |
|---|---|---|
| La Haye | 05-06-1980 | VAN WEEL |

OEB Form 1503.1 06.78